# DEMANDE DE BREVET EUROPEEN

(11) **EP 4 825 466 A1**
(43) Date de publication de la demande: **21.10.2026**
(21) Numéro de dépôt: 26173077.4
(22) Date de dépôt: 17.04.2026
(51) Int. Cl.: B01D 39/16

(54) **MATÉRIAU STRUCTURÉ À BASE DE LUFFA POUR L ISOLATION THERMIQUE ET ACOUSTIQUE, LA FILTRATION ET LA DÉPOLLUTION DE FLUIDES**

(30) Priorité: 17.04.2025 FR 2504123
(71) Demandeur: Carpanzano, Joseph, 13190 Allauch (FR); Mouri, Samir, 77230 Dammartin-en-Goële (FR); Khayat, Priscillia, 20000 Ajaccio (FR)
(72) Inventeur: Carpanzano, Joseph, 13190 Allauch (FR); Mouri, Samir, 77230 Dammartin-en-Goële (FR); Khayat, Priscillia, 20000 Ajaccio (FR)
(74) Mandataire: Roman, Alexis

(57) **Abrégé**

L'invention concerne un matériau structuré à base de luffa, conçu pour des applications d'isolation thermique et/ou acoustique, de filtration et/ou de dépollution de fluides liquides ou gazeux, comprenant une pluralité d'éponges de luffa, sous forme fragmentée et/ou non fragmentée, les éponges de luffa étant agencées de manière à préserver la structure poreuse interconnectée du luffa, et consolidées dans une structure par un moyen de consolidation sélectionné parmi un liant biosourcé et/ou un liant minéral, assurant l'adhésion entre les éponges de luffa ; et/ou un piquage mécanique établissant des liaisons traversantes à travers les éponges de luffa.

## Description

### Domaine technique.

La présente invention vise un matériau structuré à base de luffa.

L'invention porte également sur un procédé de fabrication dudit matériau.

Elle concerne également l'utilisation dudit matériau en tant qu'isolant thermique et/ou acoustique, ou comme support fonctionnel pour la filtration et/ou la dépollution de fluides liquides ou gazeux, dans une variété d'applications, notamment dans les secteurs du bâtiment, de la mobilité (véhicules terrestres, aériens ou maritimes), du traitement de l'air ou des eaux, ainsi que dans le domaine des installations et équipements industriels.

Le domaine technique de la présente invention appartient plus généralement à celui des matériaux fonctionnels biosourcés, et plus particulièrement à celui des matériaux isolants à faible impact environnemental, destinés à l'isolation thermique et/ou acoustique de bâtiments, de véhicules ou d'équipements techniques, ainsi que des matériaux filtrants ou dépolluants d'origine végétale, conçus pour capter, filtrer ou traiter certains polluants présents dans les flux d'air ou d'eau.

### État de la technique.

L'isolation thermique et/ou acoustique constitue une exigence importante dans de nombreuses applications techniques, notamment dans les domaines du bâtiment, de l'industrie ou des transports, afin d'améliorer le confort, l'efficacité énergétique ou la protection contre le bruit. De manière complémentaire, des besoins croissants concernent également la filtration et/ou la dépollution de fluides liquides ou gazeux, notamment dans les domaines de l'environnement, du traitement des eaux ou de l'air.

À cette fin, il est courant de recourir à une large gamme de matériaux isolants, élaborés à partir de ressources renouvelables d'origine végétale ou de matières premières synthétiques, selon les performances recherchées. Ces matériaux isolants peuvent être mis en oeuvre sous diverses formes, telles que des panneaux, des rouleaux, des blocs moulés, ou encore des produits en vrac, en fonction des contraintes d'installation ou des caractéristiques de l'environnement d'utilisation.

Parmi les matériaux isolants biosourcés couramment utilisés, on trouve notamment les fibres de chanvre, qui présentent une bonne aptitude à l'isolation thermique et une certaine performance acoustique. Ces fibres végétales sont généralement agglomérées sous forme de nappes, rouleaux ou panneaux à l'aide d'un liant naturel ou thermoplastique. Toutefois, ces matériaux présentent une faible résistance mécanique, ce qui peut limiter leur emploi dans des applications structurelles ou autoportantes.

D'autres matériaux isolants d'origine végétale sont issus de résidus de bois, tels que la sciure ou les copeaux. Ces produits sont souvent valorisés dans des mélanges avec des liants naturels (chaux, argile, amidon) pour former des blocs isolants ou des enduits projetés. Bien qu'ils permettent de valoriser des sous-produits de l'industrie du bois, ces matériaux présentent des performances thermiques modérées, et leur mise en œuvre peut être complexe, notamment pour garantir la stabilité dimensionnelle ou limiter les risques de tassement dans le temps.

Les fibres de hampes de bananiers ont également été étudiées comme matière première renouvelable pour la fabrication de matériaux isolants. Leur légèreté et leur structure fibreuse leur confèrent un potentiel en termes d'isolation thermique et acoustique. Cependant, la production de ces fibres nécessite des procédés de défibrage et de séchage bien maîtrisés, souvent techniquement exigeants et coûteux, en particulier pour garantir une qualité constante, une faible humidité résiduelle et une bonne homogénéité des fibres obtenues. En outre, leur développement industriel reste à ce jour limité à certaines zones géographiques disposant à la fois de l'approvisionnement en matière première et des infrastructures de transformation adaptées.

En parallèle, les matériaux isolants classiques à base de matières non renouvelables, tels que la laine de verre, la laine de roche, le polystyrène expansé (PSE), le polyuréthane (PU) ou les mousses phénoliques, présentent de bonnes performances thermiques, mais sont issus de ressources fossiles, souvent énergivores à produire, et posent des problèmes environnementaux en fin de vie (non biodégradables, difficilement recyclables, parfois émissifs en composés organiques volatils).

Il apparaît donc souhaitable de développer des matériaux isolants alternatifs, à base de ressources végétales renouvelables, ayant une empreinte environnementale réduite, tout en conservant de bonnes performances techniques, que ce soit en termes d'isolation thermique, d'absorption acoustique, de stabilité dimensionnelle, de résistance mécanique, ou encore de capacité de filtration ou de rétention de polluants.

Un but de l'invention est de proposer un matériau structuré d'origine végétale, apte à assurer une fonction d'isolation thermique et/ou acoustique, et/ou une fonction de filtration ou de dépollution de fluides liquides ou gazeux tout en étant respectueux de l'environnement.

Un autre but de l'invention est de proposer un matériau dont la structure permet une mise en forme simple, compatible avec des procédés de compression, de moulage ou d'aiguillage industriels, à faible consommation énergétique.

Encore un autre but de l'invention est de fournir un matériau présentant une bonne tenue mécanique, notamment dans des configurations autoportantes ou comprimées, sans recours excessif à des agents de consolidation chimiques.

L'invention a également pour but de proposer un matériau pouvant être rendu résistant à l'humidité et au feu, par l'ajout éventuel de traitements compatibles avec une formulation biosourcée ou faiblement impactante sur le plan environnemental.

### Présentation de l'invention.

La présente invention a pour objet un matériau structuré à base de luffa, conçu pour des applications d'isolation thermique et/ou acoustique, de filtration et/ou de dépollution de fluides liquides ou gazeux. Ce matériau est remarquable en ce qu'il comprend une pluralité d'éponges de luffa, sous forme fragmentée et/ou non fragmentée, les éponges de luffa étant agencées de manière à préserver la structure poreuse interconnectée du luffa, et consolidées dans une structure par un moyen de consolidation sélectionné parmi :
- un liant biosourcé et/ou un liant minéral, assurant l'adhésion entre les éponges de luffa ; et/ou
- un piquage mécanique établissant des liaisons traversantes à travers les éponges de luffa.

Les éponges de luffa sont ainsi agencées et stabilisées de manière à former un réseau tridimensionnel cohésif, dans lequel elles sont maintenues en place par adhésion et/ou par ancrage mécanique, selon le moyen de consolidation employé. Le matériau ainsi obtenu présente des propriétés fonctionnelles multiples, notamment en matière d'isolation thermique et/ou acoustique, de filtration, et de dépollution de fluides.

L'invention tire parti des propriétés intrinsèques du luffa, matière végétale issue du fruit séché d'une plante du genre *Luffa.* Son réseau fibreux alvéolaire naturel, à la fois léger, poreux et résilient, constitue une matrice ouverte qui se révèle particulièrement favorable à la réduction des transferts thermiques (par l'air piégé dans les pores), à l'absorption des ondes sonores (par dissipation dans la fibre), mais aussi à la rétention de particules, à la circulation de fluides, ou à la colonisation par des micro-organismes utiles, dans des contextes de filtration ou de traitement d'effluents. Même modérément comprimé (< 100 bars), le réseau du luffa conserve une porosité fonctionnelle significative.

Le matériau structuré peut être consolidé par un liant biosourcé et/ou un liant minéral, permettant de lier et de stabiliser l'ensemble tout en préservant la structure poreuse interconnectée du luffa, et/ou par un piquage mécanique, de préférence traversant, apte à solidariser mécaniquement les éponges de luffa entre elles. Dans certains modes de réalisation, la consolidation met en œuvre conjointement un liant et un piquage mécanique, afin d'améliorer la cohésion de la structure et d'adapter les propriétés finales du matériau à l'application visée.

Le piquage mécanique présente l'avantage de pouvoir contribuer à la cohésion du matériau avec ou sans ajout de liant, et peut être mis en œuvre avant, pendant ou après la compression. Lorsqu'il est utilisé en complément d'un liant biosourcé et/ou minéral, il peut notamment contribuer à renforcer la cohésion interne du matériau, à améliorer sa tenue mécanique et à faciliter sa mise en forme.

Dans tous les cas, cette consolidation conduit à un matériau présentant à la fois :
- une bonne isolation thermique, grâce à la faible conductivité thermique de l'air piégé dans la structure poreuse du luffa,
- une absorption acoustique efficace, en particulier dans les moyennes et basses fréquences,
- une résistance mécanique suffisante pour la manipulation, le transport et la mise en œuvre,
- ainsi qu'une aptitude à la mise en forme, notamment sous la forme d'un panneau, d'un rouleau, d'un bloc moulé, ou d'un élément de forme adaptée à une application de filtration, de dépollution ou d'isolation.

En outre, lorsque le matériau est configuré de manière perméable et conserve une porosité ouverte suffisante, il peut remplir des fonctions de filtration, de piégeage de particules, ou de support au traitement de fluides, notamment d'air et/ou d'eaux.

Un avantage technique notable de l'invention réside dans la conservation d'une structure poreuse fonctionnelle au sein du matériau consolidé, ce qui lui permet de cumuler légèreté, capacité de mise en forme, efficacité isolante et/ou filtrante, et aptitude à diverses intégrations dans des composants techniques.

Selon certains modes de réalisation, les éponges de luffa fragmentées comprennent des éléments dont la plus grande dimension est inférieure à 100 mm, lesdits éléments étant notamment choisis parmi des copeaux, des disques, des bandes ou un mélange de ceux-ci.

Préférentiellement, la teneur massique en éponges de luffa, fragmentées et/ou non fragmentées, est au moins égale à 70%, de préférence comprise entre 70% et 98% du poids total du matériau.

Lorsque le matériau comprend un liant, celui-ci est de préférence biosourcé, sélectionné notamment parmi les liants à base d'amidon, de protéines végétales, de gommes naturelles, de latex naturel ou de caséine, le liant biosourcé étant préférentiellement un liant à base d'amidon, tel que l'amidon de maïs, de blé, de pomme de terre ou d'igname, ou une combinaison de ceux-ci.

La teneur massique en liant est de préférence au moins égale à 2%, de préférence comprise entre 2% et 30%, du poids total du matériau structuré.

Le matériau structuré selon l'invention peut en outre comprendre au moins un composant végétal complémentaire, notamment choisi parmi des fibres de chanvre, de lin, de jute ou de coton, des sciures de bois, des copeaux de liège, ou des résidus agricoles fibreux tels que la paille, les tiges ou les hampes de plantes comme le bananier, le miscanthus, le sorgho ou le kenaf.

Le matériau structuré selon l'invention peut également comprendre au moins un additif fonctionnel, notamment choisi parmi un additif hydrophobe, ignifuge, fongicide, insecticide, algicide ou antibactérien.

Dans certains modes de réalisation, la consolidation est réalisée au moins en partie par piquage mécanique des éponges de luffa, en particulier en complément d'un liant biosourcé et/ou minéral.

Le matériau structuré selon l'invention peut être présenté sous la forme d'un panneau, d'un rouleau, d'un bloc moulé, ou d'un élément de forme adaptée à une application de filtration, de dépollution ou d'isolation.

Selon un autre aspect, l'invention vise également un procédé de fabrication d'un matériau structuré selon la présente invention, ledit procédé comprenant les étapes suivantes :
a) la fourniture d'une pluralité d'éponges de luffa, sous forme fragmentée et/ou non fragmentée ;
b) la fourniture d'un moyen de consolidation, sélectionné parmi un liant biosourcé et/ou un liant minéral, et/ou un piquage mécanique ;
c) la mise en œuvre dudit moyen de consolidation, comprenant :
   - la mise en contact des éponges de luffa avec le liant, de manière à préserver la structure poreuse interconnectée du luffa, lorsque ledit liant est utilisé ; et/ou
   - la disposition des éponges de luffa dans un volume de formage adapté, en vue d'une consolidation par compression et/ou par piquage mécanique;
d) la compression de l'ensemble ainsi obtenu dans ledit volume de formage;
e) le retrait du matériau structuré, après durcissement du liant, le cas échéant, stabilisation mécanique par piquage, et/ou refroidissement.

Dans certains modes de réalisation du procédé, le moyen de consolidation comprend un liant biosourcé et/ou minéral, de préférence un liant biosourcé est choisi parmi des liants à base d'amidon, de protéines végétales, de gommes naturelles, de latex naturel ou de caséine, de préférence un amidon de maïs, de blé, de pomme de terre ou d'igname.

Dans certains modes de réalisation du procédé, le moyen de consolidation comprend un piquage mécanique, réalisé de manière traversante, ledit piquage mécanique pouvant être effectué avant, pendant ou après la compression, avec ou sans ajout de liant biosourcé et/ou minéral.

Dans certains modes de réalisation du procédé, les éponges de luffa sont utilisées sous forme non fragmentée, de préférence, les éponges de luffa non fragmentées sont empilées et comprimées pour former un panneau monobloc.

Selon un autre aspect, la présente invention concerne également l'utilisation d'un matériau structuré selon l'invention, en tant que :
(i) élément d'isolation thermique et/ou acoustique intégré dans un composant sélectionné parmi : une paroi, une cloison, un plafond ou un plancher dans le domaine du bâtiment ; un élément de structure ou d'habillage intérieur d'un véhicule terrestre, ferroviaire, maritime ou aérien ; un caisson acoustique, un capot de machine industrielle, ou un compartiment technique ; ou un module d'habitation mobile ou préfabriqué ; ou
(ii) filtre ou élément de traitement de fluides, dans un système de filtration destiné à la filtration et/ou à la dépollution d'air et/ou d'eaux.

Selon un autre aspect encore, l'invention vise un produit isolant thermique et/ou acoustique, comprenant au moins une couche constituée d'un matériau structuré selon l'invention, ladite couche étant intégrée dans un composant d'enveloppe, de structure, d'habillage ou de construction, destiné à une application dans les domaines du bâtiment, des transports ou d'équipements techniques ou industriels.

Selon un autre aspect encore, l'invention vise également un filtre ou élément de traitement de fluide, tel qu'un filtre à air ou un support pour la biodégradation de polluants dans les eaux usées, comprenant un matériau structuré selon l'invention.

### Description détaillée.

La présente description est donnée à titre non limitatif, chaque caractéristique exposée seulement dans un mode de réalisation pouvant être généralisée aux autres modes de réalisation présentés ici ou dans le résumé de l'invention présenté précédemment. De même, une ou plusieurs caractéristiques exposées seulement dans un mode de réalisation peuvent être combinées avec une ou plusieurs autres caractéristiques exposées seulement dans un autre mode de réalisation.

La présente invention repose sur l'utilisation d'une pluralité d'éponges de luffa, sous forme fragmentée et/ou non fragmentée, consolidées dans une structure stable au moyen d'un moyen de consolidation, comprenant un liant, un piquage mécanique, ou une combinaison ces moyens. Ce mode de structuration permet d'obtenir un matériau fonctionnel adapté à des usages d'isolation thermique et/ou acoustique, de filtration, ou de dépollution. Le matériau ainsi obtenu offre un équilibre avantageux entre performances fonctionnelles (isolation, perméabilité, résistance mécanique, capacité de rétention ou de support biologique) et simplicité de mise en œuvre industrielle, notamment par des procédés de compression ou de moulage accessibles.

Par l'expression « piquage mécanique », on désigne, au sens de la présente description, tout procédé de consolidation consistant à traverser mécaniquement les éléments de luffa, fragmentés et/ou non fragmentés, à l'aide d'un dispositif d'ancrage ou de liaison, afin de former une structure cohésive. Cette expression recouvre notamment :
- la couture, consistant à relier les éléments de luffa à l'aide d'un ou plusieurs fils, cordes ou fibres textiles, formant un maillage ou des points de fixation traversants ;
- l'aiguilletage, consistant à entrelacer les fibres de luffa par piqûres répétées à l'aide d'aiguilles barbelées ou dentelées, sans ajout de fil, de manière à générer une cohésion interne par friction et enchevêtrement.

Sauf indication contraire, le terme « piquage mécanique » est utilisé dans un sens générique englobant aussi bien la couture que l'aiguilletage, ou toute combinaison des deux, et peut être mis en œuvre de manière exclusive ou en complément d'un liant, en fonction des besoins de formulation et des propriétés recherchées pour le matériau structuré.

Par le terme "acoustique", on entend l'ensemble des propriétés d'un matériau liées à sa capacité à absorber, atténuer ou isoler les ondes sonores, qu'il s'agisse de bruits aériens, structurels ou ambiants. Ce terme inclut notamment les performances dites "phoniques", relatives à la réduction de la transmission du bruit.

Sauf indication contraire, les pourcentages mentionnés dans la présente description et les revendications s'entendent en pourcentage massique par rapport au poids total du matériau structuré considéré après mise en forme et séchage éventuel. Ils peuvent être mesurés sur le produit fini ou sur le mélange consolidé avant toute découpe ou transformation secondaire.

Dans ce qui suit, on décrit tout d'abord le matériau structuré selon l'invention, ainsi que la matière végétale utilisée, à savoir l'éponge de luffa, en mettant en évidence ses propriétés structurelles et fonctionnelles. Sont ensuite présentés différents modes de réalisation du matériau structuré, portant notamment sur les formes d'utilisation du luffa (fragmentée et/ou non fragmentée), les modalités de consolidation (par liant, par piquage mécanique, notamment par couture, ou par une combinaison des deux), ainsi que les paramètres physiques susceptibles d'influencer les performances du matériau structuré (pression, température, densité, etc.). La description aborde également divers procédés de fabrication permettant d'obtenir ledit matériau structuré, ainsi que des exemples d'applications, notamment dans les domaines de l'isolation thermique et/ou acoustique, de la filtration, ou de la dépollution de fluides liquides ou gazeux. Enfin, sont décrits différents produits ou systèmes intégrant le matériau structuré selon l'invention, qu'il soit utilisé seul, sous forme monocouche ou multicouche, ou comme âme centrale dans un panneau sandwich, notamment pour des usages dans le bâtiment, les transports, les installations techniques, ou encore dans des dispositifs de traitement de l'air ou de l'eau.

### Matériau structuré :

Le matériau structuré comprend une pluralité d'éponges de luffa, utilisées sous forme fragmentée et/ou non-fragmentée.

L'éponge de luffa, également connue sous les noms de loofah ou loofa, est une structure végétale fibreuse obtenue à partir du fruit mûr puis séché de plantes du genre *Luffa,* appartenant à la famille des cucurbitacées (*Cucurbitaceae*)*.* Ce genre regroupe des lianes annuelles grimpantes, cultivées dans les régions tropicales et subtropicales. Parmi les principales espèces, on peut citer *Luffa aegyptiaca* (ou *Luffa cylindrica*), dont le fruit est allongé et cylindrique, ainsi que *Luffa acutangula,* dont le fruit présente des arêtes longitudinales plus marquées et une forme courbée.

À maturité, le fruit de luffa développe généralement une structure interne tridimensionnelle, composée de faisceaux vasculaires lignifiés, entrelacés de manière dense et régulière. Après élimination de l'enveloppe externe et des graines, cette structure est généralement lavée, séchée et nettoyée, pour former une matrice fibreuse continue, légère et ouverte, que l'on appelle communément « éponge de luffa », laquelle est principalement utilisée comme accessoire de toilette ou de nettoyage, ou encore dans certaines applications artisanales, agricoles, horticoles ou décoratives.

L'éponge de luffa présente naturellement une bonne tenue mécanique, même sous compression modérée, tout en conservant une perméabilité élevée à l'air et aux fluides.

Dans le cadre de la présente invention, l'éponge de luffa constitue un constituant végétal d'intérêt, utilisé comme phase fibreuse principale du matériau structuré, qu'elle soit mise en œuvre sous forme entière ou fragmentée (par exemple : copeaux, bandes, disques).

La structure tridimensionnelle du luffa confère au matériau structuré une résistance mécanique appréciable, notamment en compression, ce qui permet sa mise en forme sous forme de blocs, panneaux rigides ou semi-rigides, sans nécessité d'ajout de renforts structuraux externes. Le matériau structuré se distingue des isolants végétaux fibreux classiques, qui nécessitent généralement un encadrement ou un support pour assurer leur cohésion.

Grâce à la présence d'une pluralité d'éponges de luffa, qu'elles soient entières ou fragmentées (par exemple en copeaux, disques ou bandes), le matériau structuré présente une bonne stabilité dimensionnelle, limitant les phénomènes de tassement ou de déformation dans le temps, y compris lorsqu'il est soumis à une compression lors de la pose.

Le moyen de consolidation du matériau comprend un liant, un piquage mécanique, notamment par couture, ou une combinaison des deux, permettant de stabiliser la structure et d'assurer une cohésion interne durable. Lorsqu'il est présent, le liant peut être sélectionné en fonction de ses propriétés spécifiques, telles que sa biosourçabilité, sa capacité d'adhésion, son comportement au feu, ou encore sa compatibilité avec un durcissement à température modérée, selon les exigences de l'application visée (isolation, filtration, dépollution...).

La porosité naturelle du luffa, même après fragmentation, favorise une absorption acoustique efficace, en particulier dans une plage de fréquences typiquement comprise entre 250 Hz et 1000 Hz (fréquences moyennes), voire en dessous de 250 Hz (basses fréquences). Cette propriété contribue à réduire la réverbération, la transmission des sons, ainsi que les transferts thermiques par convection ou rayonnement, grâce à sa structure fibreuse interconnectée.

La fabrication du matériau structuré selon l'invention repose sur des étapes de transformation simples, mettant en œuvre des éponges de luffa brutes ou faiblement transformées, par exemple après séchage, découpe et éventuellement compression, et le cas échéant piquage mécanique, notamment par couture. Ce mode de préparation limite le recours à des procédés industriels complexes tels que le défibrage, le cardage ou l'extrusion, ce qui permet d'envisager une production à faible impact énergétique, éventuellement locale ou décentralisée.

Le matériau structuré obtenu est majoritairement, voire entièrement biosourcé, et potentiellement biodégradable ou recyclable. Il constitue une alternative durable aux isolants conventionnels à base de ressources fossiles, tout en répondant aux exigences techniques du secteur de l'isolation thermique et acoustique, de la filtration ou de la dépollution de fluides liquides ou gazeux.

Dans un mode de réalisation particulier, les éponges de luffa sont fragmentées en éléments de dimensions généralement inférieures à 120 mm, notamment sous forme de copeaux, de disques, de bandes, ou d'un mélange de ces formes. Cette fragmentation favorise une distribution homogène dans le liant, permettant de contrôler la densité et la porosité du matériau structuré en fonction des contraintes spécifiques d'usage (thermiques, acoustiques ou mécaniques).

Les formes obtenues, en particulier les disques et les bandes, présentent généralement une surface plane et régulière, ce qui facilite leur agencement dans une structure tridimensionnelle ordonnée au sein du matériau structuré. Cette organisation interne contribue à renforcer la stabilité mécanique globale du matériau, tout en favorisant la dissipation des ondes acoustiques, notamment dans les basses fréquences. Il en résulte une amélioration sensible des performances d'absorption sonore, en complément des propriétés thermiques conférées par la structure du luffa.

Les copeaux et bandes peuvent avoir une longueur inférieure à 120 mm, de préférence comprise entre 1 mm et 90 mm, et plus particulièrement entre 5 mm et 50 mm. Ces dimensions permettent d'obtenir un matériau structuré à la fois suffisamment compact pour faciliter sa mise en forme, tout en conservant une structure interne aérée et ouverte, favorable aux transferts d'air et à la dissipation thermique et acoustique.

Les disques de luffa peuvent présenter une épaisseur inférieure à 50 mm, de préférence comprise entre 5 mm et 30 mm, et un diamètre pouvant atteindre 120 mm, de préférence compris entre 5 mm et 120 mm, en fonction de la taille initiale du fruit de luffa séché. Leur forme typiquement plane et régulière facilite l'organisation tridimensionnelle du matériau, avec un effet positif sur l'absorption acoustique, notamment dans les basses fréquences.

Les formes fragmentées des éponges de luffa peuvent être obtenues par découpe mécanique, à l'aide de lames rotatives, de scies à ruban, de cisailles industrielles, ou par tout autre outil adapté. Le choix de l'outil et des paramètres de coupe (vitesse, humidité résiduelle de l'éponge, orientation de la découpe) peut être facilement déterminé par l'homme du métier, en fonction de la forme recherchée.

Selon le mode de découpe, il est possible d'obtenir soit des éléments de forme régulière, tels que des disques (par découpe transversale) ou des bandes (par découpe longitudinale), soit des fragments plus irréguliers, tels que des copeaux, des morceaux de forme aléatoire ou des éléments en vrac, notamment par découpe grossière, broyage partiel, ou encore par découpe oblique, radiale ou contournée, en fonction du résultat géométrique souhaité.

Une sélection dimensionnelle des fragments de luffa peut être mise en œuvre afin d'ajuster leur taille à l'application cible, optimiser leur répartition dans le liant, et améliorer la cohésion, la stabilité dimensionnelle et l'uniformité des propriétés isolantes, thermiques et acoustiques, du matériau selon l'invention.

Dans une variante de réalisation, le matériau structuré peut comprendre des éponges de luffa non fragmentées, utilisées telles quelles ou, de préférence, ayant fait l'objet d'un pressage préalable, réalisé sous une pression suffisante pour réduire leur volume initial tout en préservant, au moins en partie, leur structure fibreuse et leur capacité à former un réseau poreux. Ce pressage est généralement effectué sous une pression inférieure à 100 bars, de préférence comprise entre 5 bars et 80 bars, et plus particulièrement entre 10 bars et 60 bars, et à une température ambiante ou sous chaleur modérée (préférentiellement entre 25 °C et 100 °C), afin d'optimiser leur intégration dans la matrice du matériau structuré sans altérer leurs propriétés mécaniques ou isolantes.

Le pressage préalable des éponges de luffa non fragmentées constitue une option avantageuse, visant à réduire significativement leur volume tout en préservant leur structure interne tridimensionnelle. Cette opération facilite les étapes logistiques précédant la mise en œuvre, telles que le stockage, le transport et la manutention. Le volume réduit des éponges compressées permet également une insertion plus aisée dans un volume de formage délimité, tel qu'un moule ou un espace de confinement entre deux surfaces rigides, assurant un empilement plus régulier et une meilleure adaptation à la géométrie finale du matériau, notamment lorsqu'il est prévu sous forme de panneau, rouleau, bloc moulé, ou toute autre configuration

Le pressage est de préférence réalisé de sorte à préserver la structure alvéolaire tridimensionnelle du luffa, notamment son réseau fibreux et poreux, qui participe aux propriétés isolantes du matériau structuré, tant en matière de réduction des transferts thermiques que d'absorption des ondes sonores.

En outre, l'application d'une compression contrôlée en amont peut contribuer à augmenter la densité locale et la compacité des éponges de luffa, qu'elles soient utilisées sous forme non fragmentée ou fragmentée en copeaux, bandes ou disques. Cette densification permet d'améliorer l'ancrage des éléments de luffa dans le liant, favorisant ainsi une meilleure interconnexion entre les constituants du matériau structuré et, par conséquent, une cohésion mécanique renforcée après mise en forme et durcissement.

Ainsi, le pressage préalable, en plus de ses avantages logistiques, peut également contribuer à améliorer la résistance mécanique du matériau structuré final, en assurant une distribution plus dense et homogène des zones de luffa et une adhérence optimisée au sein de la matrice de liant, notamment dans le cas de configurations comprimées, telles que les panneaux rigides ou les blocs moulés.

Les éponges de luffa non fragmentées, utilisées sous forme compressée, peuvent être préparées par un pressage mécanique contrôlé, effectué sur des fruits de luffa séchés, préalablement débarrassés de leur écorce externe et de leurs graines. Le pressage peut être réalisé à l'aide de presses plates, de presses hydrauliques ou de tout autre dispositif approprié, en fonction du volume et du niveau de densification souhaité.

Le choix des paramètres de pression, de température éventuelle, de durée d'application, ainsi que le dispositif de maintien en forme peuvent être déterminés par l'homme du métier, en tenant compte des propriétés mécaniques du luffa sec, du degré de compression recherché, et de l'usage prévu (par exemple : empilement dans un moule, intégration dans un panneau rigide, etc.).

Ce pressage peut être réalisé à température ambiante ou sous chaleur modérée (notamment entre 25°C et 100°C), selon qu'il est combiné ou non à une étape ultérieure de durcissement avec le liant. Il permet d'obtenir des éléments de luffa de forme globalement aplatie, par exemple sous forme de plaques souples ou semi-rigides, présentant une épaisseur réduite, généralement inférieure à 50 mm, de préférence comprise entre 5 mm et 30 mm, en fonction de la pression appliquée, de la durée de compression et des caractéristiques initiales de l'éponge.

Le pressage est préférentiellement réalisé de manière à préserver l'organisation alvéolaire tridimensionnelle du luffa, de façon à maintenir ses propriétés isolantes. Il facilite également la mise en œuvre des éponges de luffa pressées ainsi obtenues, sous une forme compacte, aplatie et mécaniquement stable, au sein du matériau structuré composite

Dans une forme de réalisation, la teneur massique en éponges de luffa, qu'elles soient utilisées sous forme fragmentée et/ou non fragmentée, est préférentiellement comprise entre 70 % et 90 % du poids total du matériau structuré. Cette teneur permet d'obtenir de garantir une composition majoritairement biosourcée, assurant un bon compromis entre fraction fibreuse et cohésion globale, tout en répondant aux exigences environnementales croissantes dans le domaine des matériaux isolants.

### Moyen de consolidation du matériau structuré :

Le matériau structuré selon la présente invention comprend un moyen de consolidation, destiné à assurer la cohésion entre les éléments de luffa, qu'ils soient fragmentés et/ou non fragmentés. Ce moyen de consolidation comprend un liant, un piquage mécanique, notamment par couture, ou une combinaison des deux, et permet de maintenir l'ensemble des constituants du matériau structuré en une structure unifiée et stable, notamment après mise en forme, durcissement et/ou stabilisation.

Lorsque le moyen de consolidation comprend un liant, celui-ci peut être choisi parmi différents types de liants, notamment des liants biosourcés, des liants synthétiques ou des liants minéraux, tels que la chaux ou certains ciments, susceptibles de durcir par séchage ou par réaction avec l'eau. Dans certains cas, un mélange de plusieurs types de liants peut être employé, afin d'ajuster les propriétés mécaniques, l'aptitude au moulage, la résistance à l'humidité ou la compatibilité environnementale du matériau final.

Cette diversité dans le choix des liants offre une grande souplesse de formulation, permettant d'adapter les propriétés finales du matériau structuré, telles que la durabilité, la vitesse de prise, la souplesse mécanique, ou encore la résistance à l'eau et aux agents biologiques, aux contraintes spécifiques de l'application visée, qu'il s'agisse d'un usage en milieu humide, d'une pose en paroi verticale, ou d'une utilisation dans des environnements soumis à des cycles thermiques répétés.

Parmi les liants biosourcés utilisables, on peut citer par exemple les amidons végétaux, les protéines végétales (telles que celles issues du soja ou du blé), les gommes naturelles (comme la gomme guar, la gomme xanthane ou la gomme arabique), le latex naturel ou la caséine. Ces liants biosourcés présentent l'avantage d'être biodégradables et généralement compatibles avec une formulation à faible impact environnemental. Leur choix peut être ajusté en fonction de la viscosité souhaitée, du temps de prise, de la température de séchage, ou de leur capacité à former un réseau cohésif. Dans un mode de réalisation préféré, le liant biosourcé est un liant à base d'amidon, pouvant être sélectionné parmi l'amidon de maïs, l'amidon de pomme de terre, l'amidon de blé, l'amidon d'igname, ou toute combinaison de ces sources. Préférentiellement, le liant à base d'amidon est un amidon de maïs.

Les liants synthétiques peuvent inclure, à titre non limitatif, des résines thermoplastiques telles que le polyéthylène (PE), le polypropylène (PP) ou le polychlorure de vinyle (PVC), des résines thermodurcissables telles que les résines urée-formol, phénol-formol, ou encore des émulsions de copolymères acryliques ou vinyliques. Ces liants sont généralement sélectionnés pour leurs bonnes propriétés mécaniques, leur aptitude au moulage, ou leur résistance à l'eau.

La température de fusion ou d'activation thermique du liant synthétique et/ou liant biosourcé éventuellement mis en œuvre est préférentiellement comprise entre 80 °C et 200 °C, de manière à permettre une mise en forme et une consolidation efficaces sans dégrader la structure fibreuse du luffa.

Quant aux liants minéraux, ils comprennent notamment la chaux naturelle, la chaux hydraulique, ou certains ciments naturels, tels que le ciment prompt ou les mélanges pouzzolaniques à base de chaux. Ces liants présentent l'avantage de réagir avec l'eau pour former une matrice durcie, y compris en conditions humides. Ils sont ainsi particulièrement adaptés aux applications exigeant une bonne tenue à l'humidité, une durabilité accrue, ou une certaine inertie thermique. Leur capacité à absorber puis restituer l'humidité de manière passive peut également contribuer à la régulation hygrothermique du matériau structuré.

D'autres liants minéraux hydrauliques peuvent également être envisagés, notamment ceux issus de la chimie du clinker, comme le ciment Portland ou les ciments formulés à base de laitier de haut fourneau. Ces liants sont particulièrement adaptés dans les cas où une prise rapide, une résistance mécanique élevée, et/ou une tenue renforcée en milieu humide, sont recherchées.

On peut également recourir à des liants minéraux ou inorganiques aqueux à base de silicate, notamment choisis parmi les silicates alcalins solubles, tels que les silicates de sodium, de potassium ou de lithium, ainsi que leurs mélanges. Dans un mode de réalisation particulier, le liant est à base de silicate de sodium (Na₂SiO₃), par exemple sous la forme d'un silicate liquide neutre contenant typiquement de 20 % à 40 % de silicate de sodium et de 60 % à 80 % d'eau. Ce type de liant peut se présenter sous la forme d'un liquide visqueux, transparent ou sensiblement incolore, permettant un mélange aisé avec les éléments fibreux de luffa. Il peut durcir à l'air et/ou sous l'effet de la chaleur, sans nécessiter de conditions de polymérisation complexes. Il présente en outre l'avantage d'être ininflammable ou difficilement inflammable, faiblement toxique, et facilement recyclable. Compte tenu de ses propriétés favorables en matière de réaction au feu, il peut être particulièrement adapté aux applications dans lesquelles une sécurité incendie renforcée est recherchée. À titre d'exemple, un tel liant peut être commercialisé sous la référence "Silicate de Soude 38/40".

A titre d'illustration, des essais de réaction au feu ont été réalisés sur un panneau constitué de fibres de luffa végétale, non tissées, consolidées par un liant inorganique aqueux à base de silicate, en particulier de silicate de potassium, et obtenu par moulage compressé. Les essais conduits selon la norme NF P 92-501 sur des panneaux de 50 mm et 80 mm d'épaisseur ont montré l'absence d'inflammation, l'absence de chute de matière et l'absence de percement sans inflammation. L'échantillon soumis à l'essai a obtenu, dans les conditions testées, un classement M1 au sens de la classification française de réaction au feu, correspondant à un matériau non inflammable. Ces résultats confirment qu'au moins certains matériaux structurés à base de luffa selon l'invention, notamment lorsqu'ils comprennent un liant inorganique aqueux à base de silicate, sont susceptibles de présenter des propriétés intéressantes de réaction au feu, en complément de leurs propriétés d'isolation thermique et/ou acoustique.

Les liants, qu'ils soient biosourcés (ou naturels), minéraux, ou synthétiques, présentent également l'avantage de pouvoir, dans certains cas, permettre l'incorporation et la rétention de microbulles d'air au sein de la structure du matériau structuré, notamment lors des opérations de mélange ou de mise en forme. Ce phénomène peut notamment survenir lorsque des liants hydrauliques sont mis en œuvre sans vibration excessive, ou lorsque des liants synthétiques sont utilisés sous forme expansée (comme les polyuréthanes ou PVC expansés), ou encore lorsque des émulsions polymères (acryliques, vinyliques) sont associées à des charges fibreuses favorisant l'entrainement d'air. De même, certains liants naturels visqueux, tels que les amidons ou les gommes végétales, peuvent piéger de l'air lors du mélange, en l'absence de dégazage mécanique.

La présence de microbulles d'air, réparties au sein de la structure consolidée formée par au moins le liant et les éléments de luffa, contribue à réduire la densité du matériau structuré tout en améliorant ses propriétés d'isolation thermique. Ces bulles agissent comme des poches de gaz statiques, limitant les transferts de chaleur par conduction, et favorisent également une perméabilité à la vapeur d'eau, bénéfique pour la régulation hygrothermique. Cette propriété peut être exploitée pour optimiser le compromis entre légèreté, performances isolantes et respirabilité du matériau structuré final.

Dans certaines variantes, il est également possible de recourir à des techniques spécifiques pour augmenter la teneur en air incorporé au sein du matériau structuré, et ainsi renforcer ses performances thermiques. À cet effet, des mélanges comprenant des fragments de luffa et/ou des composants végétaux complémentaires - tels que ceux décrits plus loin - peuvent être associés à des additifs tels que l'alumine (Al₂O₃) et le potassium, afin de générer, sous l'effet de la chaleur, des microbulles d'hydrogène. Ces microbulles sont ensuite partiellement remplacées par de l'air, sous l'action de la température, lors des opérations de mise en forme ou de consolidation du matériau, ce qui permet de créer une porosité interne stable et bénéfique pour les performances isolantes du produit final.

La teneur massique en liant, lorsque celui-ci est employé, peut être ajustée de manière à optimiser le compromis entre cohésion mécanique, porosité et légèreté du matériau structuré. Elle est au moins égale à 2%, et préférentiellement comprise entre 2% et 30% en poids du matériau total.

La mise en œuvre du liant peut être réalisée par imprégnation, nappage, pulvérisation ou mélange direct avec les éléments de luffa, en fonction notamment de la nature du liant, de sa viscosité, de son temps de prise, ou encore de son mode de durcissement, par exemple : séchage, réaction chimique, ou activation thermique.

Dans certaines variantes de réalisation, le durcissement du liant est activé thermiquement, notamment lors de la compression, ce qui permet de favoriser la formation d'une matrice solide tout en préservant une porosité fonctionnelle. Cette porosité contribue de manière déterminante aux fonctions d'isolation thermique, d'absorption acoustique ou de filtration du matériau structuré.

Le mode d'application du liant peut également être adapté à la forme des éléments de luffa (entiers ou fragmentés). Ainsi, dans le cas d'éponges entières, un nappage de surface ou une imprégnation localisée peut suffire à stabiliser leur position lors de la mise en forme. À l'inverse, pour des fragments de luffa (copeaux, disques ou bandes), un mélange préalable avec le liant permet d'assurer une répartition homogène et une cohésion uniforme après consolidation.

Dans une variante complémentaire, la consolidation du matériau structuré peut également être assurée, en tout ou en partie, par piquage mécanique, que celui-ci soit utilisé de manière exclusive ou en complément d'un liant, selon les exigences de formulation ou les performances recherchées.

De préférence, ce piquage mécanique est réalisé par couture, au moyen d'un ou plusieurs fils, ficelles ou cordes traversant localement les éléments de luffa (fragmentée et/ou non fragmentée) et le cas échéant des composants végétaux complémentaires qui seront décrits plus loin, de manière à créer des points d'ancrage internes et à assurer la cohésion mécanique de l'ensemble. Le ou les fils (ou ficelles ou cordes) peuvent être constitués de matériaux synthétiques, tels que le polyester ou des polyamides comme le nylon ; de matériaux biosourcés, tels que le chanvre, le lin ou le coton ; de matériaux mixtes, associant par exemple des fibres synthétiques et naturelles (ex. : polyester et coton) ; ou encore de fils métalliques pour un renfort mécanique accru.

La couture permet typiquement d'ancrer mécaniquement les fibres et de stabiliser la structure tridimensionnelle du matériau, sans nécessiter l'emploi d'un liant chimique. Il peut être mis en œuvre selon différents motifs (points droits, points croisés, surpiqûres) et à différentes profondeurs, selon la forme finale du matériau ou les efforts mécaniques attendus. La couture peut également être utilisée en périphérie ou localement pour renforcer certaines zones sensibles, notamment les bords ou interfaces du matériau, ou pour maintenir en position des inserts ou des composants végétaux complémentaires. Elle offre ainsi une solution simple, adaptable et à faible impact environnemental pour la cohésion et la durabilité du matériau structuré.

Il est également possible de recourir à l'aiguilletage, qui constitue une forme spécifique de piquage consistant à entrelacer les fibres ou fragments de luffa au moyen d'aiguilles barbelées ou dentelées, traversant la matière de façon répétée pour former une structure auto-cohésive sans ajout de liant. L'aiguilletage peut être utilisé en substitution de la couture, ou en complément de celle-ci, notamment pour renforcer la tenue mécanique du matériau dans certaines zones critiques ou lors de la mise en forme finale.

Le piquage mécanique, peut être appliqué à des fragments de luffa en vrac disposés dans un moule ou un gabarit, ou à des couches successives de matériau préformé, qu'il s'agisse d'éléments fragmentés ou non fragmentés. Il permet d'obtenir un matériau consolidé tout en conservant une forte perméabilité à l'air et/ou à l'eau, ce qui est particulièrement avantageux pour des applications telles que l'isolation respirante, la filtration, ou le traitement de fluides liquides ou gazeux.

Le piquage mécanique présente en outre plusieurs avantages fonctionnels et environnementaux. Il ne nécessite ni séchage ni durcissement chimique. Il permet d'éviter les liants liquides dans des formulations entièrement biosourcées, et de limite les émissions de COV et les interactions chimiques avec les fluides traités,
ce qui en fait une solution pertinente pour des systèmes de dépollution ou de traitement biologique, notamment lorsqu'un biofilm bactérien est impliqué.

Enfin, le piquage mécanique peut également être utilisé en complément d'un liant, par exemple pour améliorer la cohésion structurelle avant moulage, ou pour réduire la quantité de liant tout en maintenant une bonne tenue mécanique.

Dans certaines variantes, le piquage mécanique peut être combiné avec l'application d'un liant, par exemple en périphérie ou en surface du matériau structuré, afin d'optimiser la tenue mécanique tout en préservant une porosité centrale élevée.

La combinaison d'un liant biosourcé et d'un piquage mécanique permet d'obtenir des matériaux à la fois performants sur le plan technique et conformes aux principes de l'écoconception, avec une bonne compatibilité vis-à-vis des objectifs de durabilité, de recyclabilité et de réduction d'impact environnemental.

### Composants végétaux complémentaires et traitements fonctionnels :

Outre l'association d'éponges de luffa et d'un moyen de consolidation, le matériau structuré selon l'invention peut également comprendre, dans certaines variantes, des composants végétaux complémentaires et/ou faire l'objet de traitements fonctionnels, destinés à adapter ou renforcer ses propriétés globales. Ces ajustements peuvent répondre à des contraintes spécifiques d'usage, telles que l'exposition à l'humidité, la résistance au feu, la présence de micro-organismes ou d'insectes xylophages, ou encore des exigences mécaniques ou thermiques selon les domaines d'application (parois verticales, sous-toitures, sols, isolation de véhicules, etc.).

Le matériau structuré peut ainsi intégrer, en combinaison avec les éponges de luffa, d'autres composants d'origine végétale, destinés à ajuster ou renforcer certaines caractéristiques comme la souplesse, la densité, la résistance mécanique ou la capacité d'absorption. À titre d'exemples non limitatifs, ces composants peuvent inclure :
- des fibres végétales telles que celles de chanvre, de lin, de coton, de jute ou encore de ramie, qui apportent souplesse, cohésion et flexibilité au matériau ;
- des particules végétales telles que la sciure de bois, les copeaux de liège, les fibres fines de bois, ou la poudre de coque de graines, qui peuvent améliorer la densité, la compacité ou les propriétés acoustiques du matériau ;
- des résidus agricoles fibreux tels que la paille de céréales (blé, seigle, riz), les tiges ou hampes de plantes à fibres comme le bananier, le kenaf, le miscanthus, ou le sorgho, qui contribuent à l'allègement de la structure et à l'amélioration des performances isolantes ;
- des produits issus de la noix de coco, tels que la fibre de coco (coir) ou la poudre de coque de coco, utilisés pour leur légèreté, leur perméabilité à l'air et leur résistance naturelle aux moisissures ;
- ou encore des combinaisons de ces différents composants.

Ces composants peuvent être intégrés par mélange direct avec les fragments de luffa, ou par superposition de couches au sein de la matrice consolidée. Le choix du mode d'incorporation dépend des performances visées, de la répartition souhaitée dans le matériau, et du procédé de fabrication retenu (pressage, moulage, stratification, etc.).

La teneur massique des composants végétaux complémentaires peut atteindre jusqu'à 30% du poids total du matériau structuré, préférentiellement comprise entre 1% et 30%.

Les composants végétaux complémentaires peuvent être utilisés pour complémenter les éléments de luffa, qu'ils soient fragmentés et/ou non fragmentés, ou pour combler les interstices au sein du matériau structuré, de manière à optimiser l'homogénéité, la cohésion et la continuité de la matrice fibreuse. Ils peuvent présenter toute forme et toute taille compatible avec le procédé de fabrication, et sont de préférence caractérisés par une dimension maximale inférieure à 100 mm, afin de faciliter leur dispersion, leur intégration mécanique et la formation d'une structure consolidée homogène.

L'incorporation de ces composants végétaux peut être réalisée selon toute méthode appropriée de dispersion, de mélange ou de stratification, connue dans le domaine des matériaux composites biosourcés. Cette opération peut intervenir avant, pendant ou après la mise en contact avec le moyen de consolidation, selon l'effet recherché, tel qu'un renfort mécanique localisé, la réalisation d'une structure multicouche, ou encore la mise en place d'un gradient de densité dans l'épaisseur du matériau structuré.

Par ailleurs, le matériau structuré peut également être soumis à un ou plusieurs traitements fonctionnels destinés à renforcer sa durabilité, sa résistance aux agressions biologiques ou environnementales, ou encore sa sécurité en cas d'incendie. Ces traitements peuvent inclure, selon les besoins, des additifs hydrophobes, ignifuges, antibactériens, fongicides, algicides et/ou insecticides.

Un traitement hydrophobe peut être appliqué pour réduire l'absorption d'humidité, qu'elle provienne de l'air ambiant, de projections ou de remontées capillaires. Des additifs hydrophobes tels que la cire naturelle, l'huile de lin ou de soja, ou des traitements au silane, peuvent être utilisés. Leur application peut être réalisée en surface ou par imprégnation profonde, avant ou après mise en forme. La teneur massique en additif hydrophobe est généralement comprise entre 0,1 % et 10 % en poids, par rapport au poids total du matériau structuré. Le traitement hydrophobe contribue à préserver la cohésion du matériau structuré, à limiter les dégradations liées à l'humidité, telles que le développement de moisissures ou les pertes de performance mécanique.

Un traitement ignifuge peut également être mis en œuvre pour améliorer le comportement au feu du matériau structuré dans les applications soumises à des exigences de sécurité incendie. Les additifs ignifuges utilisables peuvent être choisis parmi des composés phosphorés (tels que les phosphates d'ammonium, les phosphates de mélamine, ou le DOPO), des produits commerciaux tels qu'Exolit^{®} OP 930, OP 550 ou OP 1312, ainsi que des additifs inorganiques comme le trihydrate d'aluminium (Al(OH)₃), le dihydroxyde de magnésium (Mg(OH)₂), ou des oxydes métalliques (silice, titane, zinc). Des composés organiques halogénés ou non peuvent aussi être envisagés, les additifs ignifuges non halogénés étant préférés pour leur meilleure compatibilité environnementale. La teneur en agent ignifuge peut aller jusqu'à 25%, préférentiellement entre 0,1% et 20% du poids total du matériau structuré.

Un traitement fongicide et/ou insecticide peut également être envisagé, notamment en milieu tropical ou humide. Ce traitement vise à prévenir le développement de moisissures, champignons, bactéries ou insectes xylophages, tels que les termites, les Lyctus ou les capricornes des maisons (Hylotrupes bajulus). Il peut être mis en œuvre à l'aide d'agents d'origine naturelle (par exemple, huiles essentielles de neem, eucalyptus, tea tree, extraits de plantes comme la citronnelle, la propolis ou les tanins), ou à l'aide de sels minéraux comme les borates. Des fongicides de synthèse peuvent également être envisagés, notamment des imidazoles, de préférence parmi les esters d'alkyle d'acide carbamique de benzimidazole. Ces traitements peuvent être appliqués par imprégnation, pulvérisation, incorporation dans le liant, ou en combinaison avec un traitement hydrophobe. Leur teneur massique est généralement comprise entre 0,1% et 5%. Leur teneur massique peut aller jusqu'à 5%, et se situe préférentiellement dans une plage comprise entre 0,1% et 5% du poids total du matériau structuré.

Ces traitements fonctionnels peuvent être appliqués à différents stades du procédé de fabrication du matériau structuré, en amont, pendant ou en aval de la mise en œuvre du moyen de consolidation, qu'il s'agisse d'un liant, d'un piquage mécanique (couture et/ou aiguilletage), ou d'une combinaison des deux. Le choix du moment et du mode d'application dépend de la nature des additifs utilisés (hydrophobes, ignifuges, biocides, etc.) ainsi que des contraintes propres au procédé de fabrication. Selon les cas, les traitements (ou additifs) peuvent être incorporés dans le liant, appliqués directement sur les éléments de luffa (entiers ou fragmentés), ou mis en œuvre en surface après consolidation du matériau.

De manière générale, l'intégration de composants végétaux complémentaires et/ou la mise en œuvre de traitements fonctionnels doit être réalisée de manière raisonnée, en veillant à ne pas altérer les propriétés essentielles du matériau structuré selon l'invention. En particulier, ces ajouts doivent être compatibles avec le moyen de consolidation utilisé (liant et/ou piquage mécanique), de façon à préserver la cohésion mécanique, la porosité fonctionnelle, la stabilité dimensionnelle ainsi que les performances thermiques, acoustiques, et/ou de filtration du matériau. L'homme du métier saura adapter la formulation et les paramètres de fabrication en fonction de l'application visée et des contraintes environnementales associées.

### Procédé de fabrication - Applications :

Le matériau structuré selon l'invention peut être obtenu au moyen d'un procédé de fabrication mettant en œuvre l'association d'éponges de luffa, sous forme fragmentée et/ou non fragmentée, avec un liant, suivie d'une étape de compression dans un volume de formage délimité. Ce procédé, simple et flexible, permet d'élaborer des matériaux isolants thermiques et/ou acoustiques à structure ouverte et à propriétés ajustables, en fonction du choix des constituants, de leur disposition, et des paramètres de mise en œuvre appliqués.

Le procédé peut également inclure l'intégration de composants végétaux complémentaires et/ou l'application de traitements fonctionnels, destinés à adapter ou renforcer certaines propriétés du matériau structuré final, telles que sa durabilité, sa résistance à l'humidité, au feu ou aux agents biologiques.

Dans une forme de réalisation préférée, le procédé de fabrication d'un matériau structuré selon l'invention comprend les étapes suivantes :
a) la fourniture d'une pluralité d'éponges de luffa, sous forme fragmentée (par exemple : copeaux, bandes, disques) et/ou non fragmentée (éponges entières) ;
b) la fourniture d'un moyen de consolidation, comprenant un liant, un piquage mécanique, notamment par couture, ou une combinaison des deux ;
c) la mise en œuvre dudit moyen de consolidation, comprenant :
   - la mise en contact des éponges de luffa avec le liant, notamment par imprégnation, nappage, pulvérisation ou mélange direct, lorsque ledit liant est utilisé, et/ou
   - leur disposition dans un volume de formage adapté, en vue d'une consolidation par compression et/ou piquage mécanique, notamment par couture;
d) la compression de l'ensemble ainsi obtenu dans ledit volume de formage, tel qu'un moule, un gabarit, ou entre deux surfaces rigides de confinement, afin de conférer sa forme finale au matériau structuré ;
e) le retrait du matériau structuré après durcissement du liant, stabilisation mécanique par piquage, notamment par couture, et/ou refroidissement, selon la nature du moyen de consolidation utilisé.

L'expression « volume de formage » désigne, au sens de la présente description, un espace de confinement délimité dans lequel les éponges de luffa (fragmentées et/ou non fragmentées) seules ou en combinaison avec un liant, sont introduites, agencées et/ou comprimées afin de leur conférer une forme déterminée. Ce volume peut être défini par les parois d'un moule, d'un gabarit rigide ou de deux plateaux de compression, et s'adapte à la géométrie finale du matériau structuré (par exemple : panneau, bloc, rouleau, etc.).

Les moules, gabarits rigides ou plateaux de compression utilisés peuvent être réalisés en tout matériau approprié, en particulier métal, bois, plastique ou matériau composite, en fonction des contraintes mécaniques et thermiques du procédé.

Le choix du volume de formage dépend de la forme finale souhaitée pour le matériau structuré (ou le produit isolant) fini, par exemple panneau, bloc, rouleau, pièce moulée, etc. ; du degré de précision géométrique requis ; ainsi que du type de compression (à chaud, à froid, sous vide, etc.).

Dans certaines variantes, les éponges de luffa sont utilisées sous forme non fragmentée, directement disposées dans le volume de formage, notamment empilées horizontalement ou verticalement. Elles peuvent être préalablement pressées (ou pré-comprimées) par exemple sous une pression inférieure à 100 bars, de préférence comprise entre 5 bars et 80 bars, et plus particulièrement entre 10 bars et 60 bars, à température ambiante ou sous chaleur modérée, préférentiellement entre 25 °C et 100 °C, de manière à réduire leur volume sans altérer significativement leur structure fibreuse et leur porosité, et ainsi optimiser leur intégration dans le matériau structuré. La durée de pré-compression peut varier selon les caractéristiques des éponges utilisées ; à titre d'exemple, elle peut être comprise entre 30 secondes et 10 minutes.

Elles sont ensuite comprimées pour former un panneau monobloc ou un bloc moulé, stable et structuré.

Dans d'autres modes de réalisation, les éponges de luffa sont fragmentées en copeaux ou bandes dont la plus grande dimension peut être comprise entre 1 mm et 25 mm, ou en disques présentant une épaisseur pouvant être comprise entre 1 mm et 30 mm, et un diamètre pouvant être compris entre 5 mm et 100 mm. Ces fragments peuvent être mélangés au liant avant introduction dans le volume de formage.

Le procédé peut également comprendre l'ajout d'un ou plusieurs composants végétaux complémentaires (tels que des fibres de chanvre, lin, coton, sciures de bois, résidus agricoles.) et/ou l'application de traitements fonctionnels (ex. : hydrophobes, ignifuges, fongicides, etc.), réalisés avant, pendant ou après la mise en contact du luffa avec le moyen de consolidation.

La compression mise en œuvre dans le cadre du procédé de fabrication selon l'invention est réalisée sous des conditions de pression et de température suffisantes pour assurer la cohésion du matériau structuré, sans altérer de manière significative la structure des éléments de luffa (éponges fragmentées et/ou non fragmentées). En pratique, la pression appliquée est inférieure à 100 bars, de préférence comprise entre 2 bars et 80 bars, et plus particulièrement entre 4 bars et 60 bars, en fonction notamment de la nature et de la forme des éléments de luffa, du type de consolidation utilisé (avec ou sans liant), et du niveau de compacité souhaité.

La température de compression est typiquement inférieure à 200 °C, et se situe préférentiellement entre 80 °C et 200 °C, notamment lorsque le liant utilisé est de nature synthétique (thermodurcissable et/ou thermoplastique) ou biosourcé nécessitant une activation thermique.

Lorsque le matériau est consolidé uniquement par piquage mécanique, la compression peut être réalisée à température ambiante ou modérée (ex. 25 °C à 100 °C), principalement pour garantir la mise en forme et la stabilité dimensionnelle du produit final.

La durée d'application de la compression est typiquement comprise entre 1 minute et 30 minutes, par exemple de l'ordre de 2 à 15 minutes, selon les paramètres précités et les dimensions du produit fini (panneau, bloc moulé, etc.).

Ces conditions de pression, température et durée permettent d'obtenir un matériau structuré homogène et stable, présentant selon les variantes :
- des propriétés isolantes thermiques et acoustiques, adaptées aux applications dans le bâtiment, les transports ou les équipements techniques ;
- des propriétés de perméabilité et de porosité, particulièrement adaptées aux fonctions de filtration (de l'air ou de l'eau), ou de dépollution, notamment en tant que support pour la fixation de micro-organismes actifs dans la biodégradation de polluants organiques ou azotés.

Le procédé peut également comporter une étape de piquage mécanique, réalisée avant, pendant ou après la compression. Cette opération permet d'entrelacer les fibres de luffa et de consolider mécaniquement la structure, avec ou sans apport de liant.

À l'issue de la compression et éventuellement du piquage mécanique, le matériau peut être refroidi dans le volume de formage, puis démoulé et découpé selon les dimensions adaptées à son application (panneau isolant, cloison, filtre, etc.).

Un matériau structuré préféré selon l'invention comprend :
- au moins 70%, de préférence entre 70% et 98% en poids du matériau, d'une pluralité d'éponges de luffa, sous forme fragmentée et/ou non fragmentée ;
- au moins 2%, de préférence entre 2% et 30% en poids, d'un liant, de préférence un liant biosourcé, notamment à base d'amidon de maïs.

Un autre exemple de matériau structuré préféré comprend :
- au moins 70%, de préférence entre 70% et 98% en poids du matériau, d'une pluralité d'éponges de luffa, sous forme fragmentée et/ou non fragmentée, formant la matrice principale du matériau ;
- au moins 2%, de préférence entre 2% et 30% en poids, d'un liant, de préférence un liant biosourcé, notamment un liant à base d'amidon de maïs, assurant la cohésion interne du matériau structuré ;
- de 0% à 20% en poids de composants végétaux complémentaires, tels que des fibres de chanvre, de lin, de jute ou des particules végétales (copeaux de bois, coques de noix de coco, paille, etc.), permettant d'ajuster certaines propriétés mécaniques, thermiques ou de mise en forme ;
- de 0% à 10% en poids d'additifs fonctionnels, sélectionnés notamment parmi des agents hydrophobes, ignifuges, antifongiques ou insecticides, visant à améliorer la durabilité ou les performances du matériau selon son environnement d'usage.

Encore un autre exemple de matériau structuré préféré comprend :
- au moins 70% en poids du matériau, de préférence au moins 90%, et en particulier dans une plage allant de 70% à 100%, d'une pluralité d'éponges de luffa, sous forme fragmentée et/ou non fragmentée;
- de 0% à 20% en poids de composants végétaux complémentaires, tels que des fibres de chanvre, de lin, de jute ou des particules végétales (copeaux de bois, coques de noix de coco, paille, etc.);
- de 0% à 10% en poids d'additifs fonctionnels, sélectionnés notamment parmi des agents hydrophobes, ignifuges, antifongiques ou insecticides ;
- un moyen de consolidation reposant sur un piquage mécanique par couture, réalisé de préférence à l'aide d'une corde ou d'une ficelle de chanvre ou de jute, telle que celles commercialisées par l'entreprise Prorope (France). Le piquage par couture assure la cohésion mécanique de la structure sans recours à un liant, tout en maintenant une porosité favorable aux propriétés d'isolation et/ou de filtration du matériau.

Dans un mode de réalisation particulier, le matériau structuré selon l'invention comprend, sur au moins une face, et de préférence sur ses deux faces opposées, une couche externe de maintien constituée d'une maille, d'un filet, d'un tissu ouvert ou d'un non-tissé ajouré, fixée mécaniquement à la structure principale. Cette maille forme une enveloppe partielle ou complète, destinée à retenir les fragments de luffa, à prévenir leur migration ou leur dispersion lors des opérations de transport, de manipulation, de pose ou d'usage prolongé.

La fixation de ladite maille peut être assurée par piquage mécanique localisé, notamment par couture périmétrique ou points d'ancrage ponctuels, réalisés avec un ou plusieurs fils ou cordes adaptés. Ceux-ci peuvent être choisis en fonction de l'application visée, notamment parmi : des fils biosourcés, tels que le chanvre, le coton ou le lin, des fils synthétiques, par exemple en polyester ou en polyamide, ou encore des fils métalliques, dans le cas d'applications nécessitant une tenue renforcée.

Une telle maille ou tissu de retenue présente préférentiellement des ouvertures de taille inférieure à la dimension moyenne des fragments de luffa présents dans la matrice interne, de manière à assurer leur confinement, tout en préservant la porosité globale du matériau, et donc sa respirabilité, sa perméabilité à l'air et/ou à l'eau, ou encore ses performances acoustiques. Elle peut être réalisée à partir de matériaux : biosourcés, comme du coton, du chanvre ou du jute tissé, synthétiques, comme du polyester ou du polyamide, ou composites, souples ou semi-rigides, selon les exigences mécaniques et environnementales.

Cette configuration dite en "sandwich textile" avec couche(s) externe(s) de maintien permet : de stabiliser les fragments de luffa dans la structure du matériau, même en l'absence de liant ou en complément d'un piquage mécanique, de préserver l'intégrité dimensionnelle du matériau, notamment en cas de compression, de découpe, de vibrations ou de frottements répétés, de renforcer la résistance en surface, en particulier pour des applications soumises à des contraintes mécaniques, et, le cas échéant, de servir de support à un marquage, une impression ou une étiquette d'identification.

Dans les modes de réalisation comprenant une maille ou un tissu de retenue en surface, la mise en place de ladite maille peut être réalisée avant, pendant ou après l'étape de compression (étape d) du procédé de fabrication. Lorsqu'elle est mise en place avant la compression, la maille est typiquement disposée directement dans le volume de formage, au contact des parois du moule ou du gabarit, de manière à se positionner en face externe du matériau au moment de la compression. Lorsqu'elle est appliquée pendant ou après la compression, elle peut être fixée mécaniquement au matériau structuré, notamment par couture périmétrique, par piquage ponctuel ou par tout moyen de liaison adapté, selon la configuration retenue. Cette étape complémentaire permet ainsi de former une enveloppe protectrice, partielle ou complète, ayant pour fonction de maintenir en place les éléments de luffa, qu'ils soient fragmentés et/ou non fragmentés, de renforcer l'intégrité en surface du matériau structuré, et de faciliter son intégration dans un composant d'isolation, une cloison technique, une structure multicouche, un panneau sandwich ou un dispositif de filtration.

Dans certains modes de réalisation, le nombre d'éponges de luffa, fragmentées et/ou non fragmentées, mises en œuvre dans le matériau structuré peut être ajusté de manière à obtenir une épaisseur finale prédéterminée, en fonction de l'application visée (paroi isolante, cloison, filtre, etc.). Par exemple, plusieurs éponges entières peuvent être empilées dans le volume de formage, horizontalement ou verticalement, pour constituer une matrice continue de plus grande épaisseur avant consolidation. Dans d'autres variantes, plusieurs couches de matériau structuré préalablement formées peuvent être superposées, puis assemblées par compression et/ou piquage mécanique (notamment par couture), afin de former un matériau multicouche présentant l'épaisseur, la densité ou la structure requise. Ce mode de réalisation modulaire facilite l'adaptation du produit aux contraintes dimensionnelles ou mécaniques spécifiques, tout en conservant les propriétés fonctionnelles du matériau à base de luffa (isolation thermique, acoustique, filtration, etc.).

Ainsi, dans le contexte de la présente invention, l'expression « matériau structuré » peut désigner :
- un matériau structuré monocouche, d'une épaisseur prédéterminée (ε), comprenant une pluralité d'éponges de luffa fragmentées et/ou non fragmentées, éventuellement associées à des composants végétaux complémentaires, tels que des fibres ou particules d'origine végétale (chanvre, lin, jute, sciure, paille, coques de coco, etc.), et consolidées par un moyen de consolidation tel qu'un liant, un piquage mécanique (par exemple par couture) ou une combinaison des deux. Le cas échéant, cette monocouche peut également comporter une ou deux couches externes de maintien, notamment une maille ou un tissu de retenue ; ou
- un matériau structuré multicouche, présentant une épaisseur globale n × ε (avec n ≥ 2), résultant de la superposition et de l'assemblage d'au moins deux matériaux structurés monocouches, chacun présentant une structure consolidée selon l'invention.

Ce mode de réalisation multicouche permet notamment d'optimiser les performances mécaniques ou thermiques, ou encore de combiner différentes fonctions ou caractéristiques au sein d'un seul produit.

Le matériau structuré obtenu par le procédé selon la présente invention peut être mis en œuvre sous différentes formes selon les besoins. Il peut notamment être configuré sous la forme :
- de panneaux rigides ou semi-rigides, adaptés à l'isolation thermique et/ou acoustique des parois intérieures ou extérieures ;
- de rouleaux souples ou flexibles, conçus pour épouser des surfaces courbes, irrégulières ou difficiles d'accès;
- de blocs moulés ou préformés, pouvant servir de remplissage structurel, de cloison technique ou de protection acoustique ;
- d'éléments filtrants ou modules de traitement, tels que des cartouches, filtres plats ou blocs perméables, destinés à la rétention de particules, à la filtration de fluides liquides ou gazeux, ou encore au support de micro-organismes pour des applications de dépollution ou de traitement biologique.

Le matériau structuré selon l'invention, notamment lorsqu'il est configuré sous forme de panneau, rigide ou semi-rigide, peut présenter les caractéristiques dimensionnelles suivantes :
- une épaisseur généralement supérieure à 20 mm, de préférence supérieure à 30 mm, et plus particulièrement supérieure à 40 mm, et/ou inférieure à 750 mm, de préférence inférieure à 500 mm, et plus particulièrement inférieure à 250 mm ;
- une longueur généralement supérieure à 250 mm, de préférence supérieure à 500 mm, notamment supérieure à 1000 mm, voire plus de 1000 mm ; et/ou inférieure à 7500 mm, de préférence inférieure à 5000 mm, notamment inférieure à 2500 mm;
- une largeur généralement supérieure à 200 mm, de préférence supérieure à 300 mm, notamment supérieure à 300 mm, et/ou inférieure à 1500 mm, de préférence inférieure à 1000 mm, plus particulièrement inférieure à 750 mm.

La densité du matériau structuré final dépend principalement des paramètres de compression, de la proportion de liant mise en œuvre, ainsi que, le cas échéant, de l'ajout de composants végétaux complémentaires et/ou d'additifs fonctionnels. Elle est préférentiellement comprise entre 20 kg/m³ et 275 kg/m³, et plus particulièrement entre 40 kg/m³ et 250 kg/m³, en fonction des applications visées et des performances mécaniques ou thermiques recherchées.

Le matériau structuré selon l'invention présente un excellent compromis entre légèreté, performance isolantes (thermiques et acoustiques), durabilité environnementale, facilité de mise en œuvre et tenue mécanique. Grâce à sa structure fibreuse, poreuse, compressible et biosourcée, il se prête à une intégration polyvalente dans une grande variété d'applications dans les domaines du bâtiment, des transports, de l'industrie, de l'habitat modulaire, des équipements technique ou industriels, ou encore du traitement de l'air et de l'eau.

Le matériau structuré selon l'invention présente d'excellentes propriétés d'isolation thermique et acoustique, en lien direct avec sa structure interne fibreuse, poreuse et résiliente. Sa conductivité thermique (λ) est généralement inférieure à 0,045 W/m.K, et se situe préférentiellement entre 0,030 et 0,040 W/m.K, ce qui en fait un isolant performant, notamment pour les parois verticales ou horizontales dans les secteurs du bâtiment, de l'habitat modulaire ou des équipements techniques.

La conductivité thermique (λ) est une grandeur physique exprimée en watts par mètre-kelvin (W/m.K), qui traduit la capacité d'un matériau à conduire la chaleur. Plus cette valeur est faible, plus le matériau est isolant. La mesure de la conductivité thermique peut être réalisée selon des méthodes normalisées, notamment la norme NF EN 12667 (ou ISO 8301), relative à la détermination de la conductivité thermique des produits homogènes en régime stationnaire à l'aide d'un appareil à plaque chaude gardée. Ces méthodes permettent d'évaluer de manière fiable les performances thermiques du matériau structuré dans des conditions représentatives de son usage.

De façon générale, le matériau structuré selon l'invention offre en outre un indice d'affaiblissement acoustique (Rw) supérieur à 30 dB, et en particulier compris entre 35 et 50 dB, selon les paramètres de configuration tels que la densité, l'épaisseur ou la structure multicouche éventuelle.

L'indice Rw (indice d'affaiblissement acoustique) est une valeur normalisée, exprimée en décibels (dB), qui caractérise la capacité d'un matériau ou d'un élément de construction à réduire la transmission des bruits aériens. Plus cette valeur est élevée, plus l'efficacité du matériau en matière d'isolation acoustique est grande, notamment entre deux espaces séparés. Il peut être déterminé selon des méthodes normalisées, notamment la norme EN ISO 717-1, à partir de mesures en laboratoire portant sur l'atténuation du bruit dans une gamme de fréquences définie. Cet indice constitue un critère essentiel dans le domaine de l'isolation acoustique des parois, des cloisons, des plafonds ou des éléments d'habillage.

La présente invention vise aussi un produit isolant thermique et/ou acoustique, comprenant au moins une couche constituée du matériau structuré décrit précédemment. Cette couche peut être incorporée dans un composant d'enveloppe, de structure, d'habillage ou de construction, destiné à une application dans les domaines du bâtiment, des transports ou d'équipements techniques ou industriels.

Un tel composant d'enveloppe, de structure, d'habillage ou de construction peut notamment être sélectionné parmi : une paroi, une cloison ou un plafond d'un bâtiment ; un élément intérieur d'un véhicule aérien ; une structure d'un véhicule terrestre (véhicule léger, utilitaire, de transport collectif, etc.) ; une cloison ou un compartiment de véhicule ferroviaire ou maritime ; un caisson acoustique ou un capot de machine industrielle ; ou encore, un module d'habitation mobile ou préfabriqué.

Dans certaines configurations, le matériau structuré est utilisé sous forme d'âme centrale au sein d'un panneau sandwich, ladite âme étant prise en sandwich entre deux parements rigides ou semi-rigides, sélectionnés notamment parmi des feuilles de plâtre, de contreplaqué, de bois aggloméré, de polymère ou de matériau composite (par exemple : fibre de verre et résine polyester ou époxy, ou un stratifié plastique (HPL)). Ce type de structure permet d'obtenir des panneaux isolants prêts à poser, adaptés à une grande variété d'usages dans le bâtiment ou les transports.

Dans d'autres réalisations, le matériau structuré selon l'invention peut être configuré sous forme de panneau moulé, de rouleau souple ou de bloc préformé, afin d'épouser la géométrie du composant dans lequel il est intégré. Cette modularité de forme facilite son intégration dans des configurations standards ou sur mesure, et permet une mise en œuvre simple, notamment pour des installations nécessitant un ajustement à des surfaces complexes ou irrégulières.

Dans certaines variantes, le matériau structuré est agencé sous forme monocouche ou multicouche, éventuellement en association avec d'autres couches fonctionnelles, telles que des couches pare-vapeur, pare-pluie, réfléchissantes ou acoustiques. Cette configuration multicouche permet d'optimiser les performances globales du produit, en répondant simultanément à plusieurs exigences (étanchéité, isolation, protection contre l'humidité ou les nuisances sonores, etc.).

La présente invention concerne également un filtre ou un élément de traitement de fluide, tel qu'un filtre à air ou un support destiné à la biodégradation de polluants dans les eaux usées, comprenant un matériau structuré selon l'invention. Grâce à sa structure poreuse tridimensionnelle, offrant une large surface spécifique et des voies de circulation favorables à l'écoulement des fluides, ledit matériau permet non seulement la rétention mécanique de particules en suspension, mais également la fixation et la prolifération de micro-organismes, notamment des bactéries capables de dégrader des polluants organiques ou azotés présents dans les eaux usées. Cette configuration rend le matériau particulièrement adapté à des fonctions de filtration, de piégeage ou de traitement actif de composés indésirables présents dans des fluides liquides (tels que les eaux usées) ou gazeux (tels que l'air vicié), dans le cadre de procédés de dépollution, de traitement biologique ou physico-chimique.

### Applications dans le bâtiment :

Le matériau structuré selon l'invention peut être utilisé dans le domaine de la construction neuve ou de la rénovation, en tant qu'isolant thermique et/ou acoustique pour :
- les parois verticales (intérieures ou extérieures),
- les cloisons (fixes ou amovibles),
- les plafonds, sous-plafonds et combles,
- les planchers intermédiaires ou les dalles allégées,
- ou encore dans les murs de modules d'habitation préfabriqués ou mobiles.

Le matériau structuré selon l'invention peut être mis en œuvre sous différentes formes en fonction de l'application visée. Il peut notamment être utilisé sous forme de panneaux rigides ou semi-flexibles, de blocs moulés, ou encore d'éléments préformés adaptés à des géométries spécifiques. Il peut également être intégré comme âme centrale dans un panneau sandwich, notamment entre deux parements rigides constitués de bois, de contreplaqué, de panneaux de fibres, de matériaux composites ou de plaques de plâtre. Cette configuration permet d'obtenir des éléments constructifs légers et performants, tout en assurant une bonne compatibilité avec les systèmes constructifs conventionnels du bâtiment, tels que les ossatures métalliques, les montants bois ou les rails pour cloisons sèches. L'association du matériau structuré avec des plaques de plâtre permet par exemple de fabriquer des cloisons isolantes prêtes à poser, facilitant la mise en œuvre sur chantier et permettant une intégration directe dans des environnements intérieurs finis.

En pratique, le panneau sandwich isolant peut être fabriqué par compression simultanée ou successive du matériau structuré entre les deux parements rigides, avec ou sans ajout de liant complémentaire en surface, selon le type de collage ou d'adhésion recherché. Les parements peuvent être collés, vissés ou agrafés, en fonction des contraintes mécaniques ou des méthodes d'assemblage adoptées. Cette structure multicouche permet d'accroître la rigidité, d'améliorer la résistance à la flexion, et de protéger le cœur isolant contre les chocs ou l'humidité. En fonction des performances recherchées, il est également possible d'ajouter une barrière pare-vapeur, pare-feu ou acoustique, sous forme de film, de feuille métallisée ou de couche fonctionnelle intégrée aux parements.

Le matériau structuré selon l'invention convient également aux usages acoustiques décoratifs (ex. : panneaux muraux absorbants dans des bureaux ou écoles) et peut être associé à des matériaux de finition naturels pour des constructions à faible impact environnemental.

Le matériau structuré selon l'invention est également bien adapté à des habitats légers ou temporaires, par exemple pour des conteneurs aménagés, des abris techniques, ou des cabines de chantier, des véhicules de restauration mobile, des stands itinérants ou espaces d'exposition temporaires, ainsi que des unités d'habitation d'urgence, des maisons compactes autonomes ou des logements modulaires biosourcés.

### Applications dans l'aéronautique :

En raison de sa légèreté, de sa structure amortissante et de sa potentielle conformité aux normes ignifuges, le matériau structuré selon l'invention peut être intégré dans des aménagements intérieurs d'aéronefs, tels que : des cloisons de cabine ou panneaux latéraux, des planchers techniques ou parois de soute, des compartiments avioniques ou zones moteurs, ou encore comme matériau absorbant dans les garnitures de sièges, panneaux de plafond ou structures insonorisées.

En particulier, le matériau structuré selon l'invention peut être utilisé comme âme de panneau sandwich léger, contribuant à l'atténuation des vibrations et à la réduction du bruit en cabine.

### Applications dans les véhicules terrestres :

Le matériau structuré selon la présente invention peut être intégré dans divers types de véhicules terrestres, tels que les voitures particulières, les véhicules utilitaires ou de transport collectif. Il peut être utilisé pour l'isolation acoustique de composants tels que les portières, les planchers, les pavillons, les coffres, ou encore les compartiments moteur et les zones situées sous le tableau de bord. Il peut également servir à l'insonorisation des habitacles ou comme matériau de remplissage dans les sièges et habillages intérieurs.

Il peut également être utilisé dans des véhicules électriques, où l'absence de bruit moteur accentue la perception des bruits parasites (roulement, vibrations, flux d'air, etc.), rendant la maîtrise acoustique plus critique.

Dans ce contexte, le matériau structuré peut être mis en œuvre sous forme de panneaux moulés, compressés ou prédécoupés, conformés à la géométrie de certaines zones spécifiques du véhicule, telles que les passages de roue, les doublures de plancher ou les cloisons intérieures. Il contribue ainsi à atténuer efficacement la transmission des bruits de roulement, des vibrations structurelles et des nuisances aérodynamiques, tout en améliorant globalement le confort acoustique à l'intérieur du véhicule.

### Applications ferroviaires et maritimes :

Dans les secteurs ferroviaire et maritime, le matériau structuré selon la présente invention peut être utilisé pour l'isolation acoustique des cloisons compartimentées, les plafonds techniques, cabines de conduite ou espaces voyageurs, l'atténuation des vibrations structurelles, l'habillage intérieur écologique de cabines ou de zones techniques. Il contribue à réduire les nuisances sonores tout en remplaçant partiellement ou totalement des matériaux synthétiques, souvent plus lourds ou non recyclables.

### Insonorisation de machines et équipements industriels :

Le matériau structuré selon l'invention peut également être employé dans des caissons acoustiques pour groupes électrogènes, pompes, compresseurs ou ventilateurs, des capots de machines, coffrages techniques, ou boîtiers d'équipements, ou des cellules d'essai, cabinets de mesure acoustique ou espaces techniques industriels. Grâce à sa porosité et sa structure ouverte, il agit comme barrière acoustique (réduction de la transmission) et/ou comme absorbeur (réduction de la réverbération), tout en étant léger, non toxique, et facilement adaptable.

### Applications en filtration et en dépollution :

Le matériau structuré selon l'invention peut également être utilisé comme élément de filtration ou de traitement de fluide, notamment dans des dispositifs destinés au traitement de l'air ou des eaux usées. Grâce à sa structure poreuse tridimensionnelle, qui offre à la fois une large surface spécifique et des canaux de circulation interconnectés, le matériau structuré permet :
- la rétention mécanique de particules en suspension dans des fluides liquides ou gazeux ;
- la fixation, la croissance et l'activité de micro-organismes, tels que des bactéries capables de dégrader des polluants organiques ou azotés ;
- et, le cas échéant, la réduction active de contaminants via des mécanismes biologiques ou physico-chimiques.

Cette configuration le rend particulièrement adapté à des fonctions de filtration, de piégeage ou de biodégradation, notamment dans :
- des filtres à air destinés à purifier l'air vicié dans des environnements industriels ou domestiques ;
- des supports filtrants ou milieux de culture pour micro-organismes utilisés dans le traitement biologique d'effluents, en particulier pour la dépollution de l'eau (stations d'épuration, bassins d'aquaculture, biofiltres, etc.).

## Revendications

1. Matériau structuré à base de luffa, conçu pour des applications d'isolation thermique et/ou acoustique, de filtration et/ou de dépollution de fluides liquides ou gazeux, comprenant une pluralité d'éponges de luffa, sous forme fragmentée et/ou non fragmentée, les éponges de luffa étant agencées de manière à préserver la structure poreuse interconnectée du luffa, et consolidées dans une structure par un moyen de consolidation sélectionné parmi :
- un liant biosourcé et/ou un liant minéral, assurant l'adhésion entre les éponges de luffa ; et/ou
- un piquage mécanique établissant des liaisons traversantes à travers les éponges de luffa.

2. Matériau structuré selon la revendication 1, dans lequel les éponges de luffa fragmentées comprennent des éléments dont la plus grande dimension est inférieure à 100 mm, lesdits éléments étant notamment choisis parmi des copeaux, des disques, des bandes ou un mélange de ceux-ci.

3. Matériau structuré selon la revendication 1 ou 2, dans lequel la teneur massique en éponges de luffa, fragmentées et/ou non fragmentées, est au moins égale à 70%, de préférence comprise entre 70% et 98% du poids total du matériau.

4. Matériau structuré selon l'une des revendications 1 à 3, dans lequel le liant est biosourcé, sélectionné notamment parmi les liants à base d'amidon, de protéines végétales, de gommes naturelles, de latex naturel ou de caséine, le liant biosourcé étant préférentiellement un liant à base d'amidon, tel que l'amidon de maïs, de blé, de pomme de terre ou d'igname, ou une combinaison de ceux-ci.

5. Matériau structuré selon l'une quelconque des revendications 1 à 4, dans lequel la teneur massique en liant est au moins égale à 2 %, de préférence comprise entre 2 % et 30 %, du poids total du matériau structuré.

6. Matériau structuré selon l'une quelconque des revendications 1 à 5, comprenant en outre :
- au moins un composant végétal complémentaire, notamment choisi parmi des fibres de chanvre, de lin, de jute ou de coton, des sciures de bois, des copeaux de liège, ou des résidus agricoles fibreux tels que la paille, les tiges ou les hampes de plantes comme le bananier, le miscanthus, le sorgho ou le kenaf ;
et/ou
- au moins un additif fonctionnel, notamment choisi parmi un additif hydrophobe, ignifuge, fongicide, insecticide, algicide ou antibactérien.

7. Matériau structuré selon l'une quelconque des revendications 1 à 6, dans lequel la consolidation est réalisée au moins en partie par piquage mécanique des éponges de luffa, en particulier en complément d'un liant biosourcé et/ou minéral.

8. Matériau structuré selon l'une quelconque des revendications 1 à 7, présenté sous la forme d'un panneau, d'un rouleau, d'un bloc moulé, ou d'un élément de forme adaptée à une application de filtration, de dépollution ou d'isolation.

9. Procédé de fabrication d'un matériau structuré selon l'une quelconque des revendications 1 à 8, comprenant les étapes suivantes :
a) la fourniture d'une pluralité d'éponges de luffa, sous forme fragmentée et/ou non fragmentée ;
b) la fourniture d'un moyen de consolidation, sélectionné parmi un liant biosourcé et/ou un liant minéral, et/ou un piquage mécanique ;
c) la mise en œuvre dudit moyen de consolidation, comprenant :
- la mise en contact des éponges de luffa avec le liant, de manière à préserver la structure poreuse interconnectée du luffa, lorsque ledit liant est utilisé ; et/ou
- la disposition des éponges de luffa dans un volume de formage adapté, en vue d'une consolidation par compression et/ou par piquage mécanique;
d) la compression de l'ensemble ainsi obtenu dans ledit volume de formage;
e) le retrait du matériau structuré, après durcissement du liant, le cas échéant, stabilisation mécanique par piquage, et/ou refroidissement.

10. Procédé selon la revendication 9, dans lequel le moyen de consolidation comprend un liant biosourcé et/ou minéral, de préférence un liant biosourcé est choisi parmi des liants à base d'amidon, de protéines végétales, de gommes naturelles, de latex naturel ou de caséine, de préférence un amidon de maïs, de blé, de pomme de terre ou d'igname.

11. Procédé selon la revendication 9, dans lequel le moyen de consolidation comprend un piquage mécanique, réalisé de manière traversante, ledit piquage mécanique pouvant être effectué avant, pendant ou après la compression, avec ou sans ajout de liant biosourcé et/ou minéral.

12. Procédé selon l'une quelconque des revendications 9 à 11, dans lequel les éponges de luffa sont utilisées sous forme non fragmentée, de préférence, les éponges de luffa non fragmentées sont empilées et comprimées pour former un panneau monobloc.

13. Utilisation d'un matériau structuré selon l'une quelconque des revendications 1 à 8, en tant que :
(i) élément d'isolation thermique et/ou acoustique intégré dans un composant sélectionné parmi : une paroi, une cloison, un plafond ou un plancher dans le domaine du bâtiment ; un élément de structure ou d'habillage intérieur d'un véhicule terrestre, ferroviaire, maritime ou aérien ; un caisson acoustique, un capot de machine industrielle, ou un compartiment technique ; ou un module d'habitation mobile ou préfabriqué ; ou
(ii) filtre ou élément de traitement de fluides, dans un système de filtration destiné à la filtration et/ou à la dépollution d'air et/ou d'eaux.

14. Produit isolant thermique et/ou acoustique, comprenant au moins une couche constituée d'un matériau structuré selon l'une quelconque des revendications 1 à 11, ladite couche étant intégrée dans un composant d'enveloppe, de structure, d'habillage ou de construction, destiné à une application dans les domaines du bâtiment, des transports ou d'équipements techniques ou industriels.

15. Filtre ou élément de traitement de fluide, tel qu'un filtre à air ou un support pour la biodégradation de polluants dans les eaux usées, comprenant un matériau structuré selon l'une quelconque des revendications 1 à 11.
